# EUROPÄISCHE PATENTANMELDUNG

(11) **EP 3 023 291 A1**
(43) Veröffentlichungstag der Anmeldung: **25.05.2016**
(21) Anmeldenummer: 15194862.7
(22) Anmeldetag: 17.11.2015
(51) Int. Cl.: B60L 11/18

(54) **UMRICHTERSYSTEM ZUM ELEKTRISCHEN ANTREIBEN EINES FAHRZEUGES**

(30) Priorität: 20.11.2014 EP 14194190
(71) Anmelder: ABB Technology AG, 8050 Zürich (CH)
(72) Erfinder: Guggisberg, Beat, 5417 Untersiggenthal (CH); Ronner, Beat, 5436 Würenlos (CH)
(74) Vertreter: ABB Patent Attorneys

(57) **Zusammenfassung**

Ein Umrichtersystem zum elektrischen Antrieb eines Fahrzeuges umfassend einen netzseitigen Umrichter, einen Gleichspannungszwischenkreis mit zumindest einem ersten Potentialleiter und einem zweiten Potentialleiter und einem motorseitigen Umrichter. Der motorseitige Umrichter erlaubt einen bidirektionalen Energiefluss. Der netzseitige Umrichter ist eingangsseitig einphasig und mit einem Versorgungsnetz verbindbar, ausgangsseitig mit dem Gleichspannungszwischenkreis verbunden und bezieht während des Betriebs Energie aus dem Versorgungsnetz. Der netzseitige Umrichter ist ein unidirektionaler Umrichter und erlaubt einen Energiefluss vom Versorgungsnetz in den Gleichspannungszwischenkreis. Der Gleichspannungszwischenkreis verbindet den netzseitigen Umrichter mit dem motorseitigen Umrichter und weist zwischen dem ersten Potentialleiter und dem zweiten Potentialleiter einen ersten elektrischen Energiespeicher auf. Mit dem Gleichspannungszwischenkreis ist über eine elektrische Anbindung ein weiterer elektrischer Energiespeicher verbunden. Der Energiefluss vom Gleichspannungszwischenkreis in den weiteren elektrischen Energiespeicher, wie auch der Energiefluss aus dem weiteren elektrischen Energiespeicher in den Gelichspannungszwischenkreis ist regelbar.

## Beschreibung

Die vorliegende Erfindung bezieht sich auf das Gebiet der Umrichtersysteme zum elektrischen Antreiben eines Fahrzeuges, insbesondere auf Umrichtersysteme gemäss dem Oberbegriff von Anspruch 1. Weiter bezieht sich die vorliegende Erfindung auf ein elektrisches Fahrzeug mit einem Umrichtersystem gemäss dem Oberbegriff von Anspruch 1.

Derartige Umrichtersysteme sind dem Fachmann bestens bekannt und weisen insbesondere einen netzseitigen Umrichter, einen Gleichspannungszwischenkreis und einen motorseitigen Umrichter auf, wobei der netzseitige Umrichter mit einem Versorgungsnetz und der motorseitige Umrichter mit einer elektrischen Maschine zum Antreiben eines Fahrzeuges verbunden ist. Um ein energieeffizientes Antreiben des Fahrzeuges zu ermöglichen, erlauben solche Energiesysteme typischerweise einen bidirektionalen Energiefluss, wodurch die beim elektrischen Bremsen des Fahrzeuges entstehende Energie in das Versorgungsnetz zurück gespeist werden kann, welcher Vorgang dem Fachmann als Rekuperation der Bremsenergie bekannt ist. Durch die Rekuperationsmöglichkeit ins Versorgungsnetz muss die Bremsenergie nicht in Bremswiderständen oder ähnlichen Anlagen zwecklos zu Wärme umgewandelt werden. Eine solche Rekuperationsmöglichkeit stellt spezielle Anforderungen an das Umrichtersystem. Diese Anforderungen führen zu, ganz besonders im Falle von topologisch anspruchsvollen Umrichtersystemen, wie beispielsweise einem Multilevel-Umrichtersystem, aufwendigen und daher teuren Ausführungsformen des Umrichtersystems.

Aufgabe der Erfindung ist es folglich ein Umrichtersystem anzugeben, welches die Rekuperation der Bremsenergie ermöglicht und eine Alternative zu den bestehenden Lösungen darstellt.

Erfindungsgemäss wird diese Aufgabe durch das Umrichtersystem gemäss Anspruch 1 wie auch durch ein elektrisches Fahrzeug gemäss Anspruch 13 gelöst.

Erfindungsgemäss weist das Umrichtersystem zum elektrischen Antreiben eines Fahrzeuges einen netzseitigen Umrichter, einen Gleichspannungszwischenkreis mit einem ersten Potentialleiter auf einem ersten elektrischen Potential und einem zweiten Potentialleiter auf einem zweiten elektrischen Potential verschieden vom ersten elektrischen Potential und einen motorseitigen Umrichter auf, wobei der motorseitige Umrichter einen bidirektionalen Energiefluss erlaubt, wobei der netzseitige Umrichter eingangsseitig einphasig und zumindest mit einem Versorgungsnetz verbindbar, ausgangsseitig mit dem Gleichspannungszwischenkreis verbunden ist und während des Betriebs Energie aus dem Versorgungsnetz bezieht, wobei der Gleichspannungszwischenkreis den netzseitigen Umrichter mit dem motorseitigen Umrichter verbindet, wobei der Gleichspannungszwischenkreis zwischen dem ersten Potentialleiter und dem zweiten Potentialleiter einen ersten elektrischen Energiespeicher aufweist, wobei mit dem Gleichspannungszwischenkreis über eine elektrische Anbindung ein weiterer elektrischer Energiespeicher verbunden ist, und wobei der Energiefluss in den weiteren elektrischen Energiespeicher regelbar ist, wobei der netzseitige Umrichter ein unidirektionaler Umrichter ist und einen Energiefluss vom Versorgungsnetz in den Gleichspannungszwischenkreis erlaubt und ein Energiefluss aus dem weiteren elektrischen Energiespeicher in den Gleichspannungszwischenkreis regelbar ist.

Das erfindungsgemässe Umrichtersystem weist folglich einen weiteren Energiespeicher auf, worin beispielsweise die beim elektrischen Bremsen rekuperierte Energie gespeichert und woraus beim nächsten Beschleunigungsvorgang Energie bezogen werden kann. Diese bevorzugte Ausführungsform des Umrichtersystems ermöglicht das Antreiben des Fahrzeuges durch den Bezug von Energie aus dem weiteren Energiespeicher, beispielsweise beim Überfahren von Trennstecken oder während kurzzeitigen Unterbrechungen der Verbindung des Pantographen zur Fahrleitung, und erlaubt so ein ruckfreieres Passieren derartiger Unterbrechungen zum Versorgungsnetz. Auch ermöglicht diese bevorzugte Ausführungsform eine einfachere Ausbildung des netzseitigen Umrichters, ohne dabei auf die Verwendung der rekuperierten Energie verzichten zu müssen.

Gemäss einer bevorzugten Ausführungsform des Umrichtersystems weist die elektrische Anbindung des weiteren elektrischen Energiespeichers einen weiteren, bidirektionalen Umrichter auf, der einerseits an den Gleichspannungszwischenkreis und andererseits an den weiteren Energiespeicher angeschlossen ist.

Diese bevorzugte Ausführungsform des Umrichtersystems ermöglicht eine besonders einfache Regelung des Energieflusses in und aus dem weiteren elektrischen Energiespeicher.

Gemäss einer weiteren, bevorzugten Ausführungsform des Umrichtersystems entspricht die Nennleistung des weiteren, bidirektionalen Umrichters zumindest 50% der Nennleistung des motorseitigen Umrichters, vorzugsweise mindestens 80% der Nennleistung und besonders bevorzugt mindestens 90% der Nennleistung.

Diese bevorzugte Ausführungsform des Umrichtersystems ermöglicht, dass die rekuperierte Energie mehrheitliche zum weiteren Energiespeicher transferiert werden kann. Weiter ermöglicht diese bevorzugte Ausführungsform auch das schnelle Bereitstellen der im weiteren Energiespeicher gespeicherten Energie.

Gemäss einer weiteren, bevorzugten Ausführungsform des Umrichtersystems ist der maximale Energieinhalt des weitere Energiespeichers derart bemessen, dass dieser zumindest während 1 Sekunde, vorzugsweise während mindestens 5 Sekunden und besonders bevorzugt während mindestens 10 Sekunden die Nennleistung des motorseitigen Umrichters aufnehmen kann.

Diese bevorzugte Ausführungsform des Umrichtersystems ermöglicht das mehrheitliche Speichern der rekuperierten Bremsenergie auch bei längeren Bremsstrecken, wodurch ein besonders effizientes Antreiben des Fahrzeuges möglich ist.

Gemäss einer weiteren, bevorzugten Ausführungsform des Umrichtersystems kann der weitere Energiespeicher zumindest fünf Mal die Energie des ersten Energiespeichers speichern.

Diese bevorzugte Ausführungsform des Umrichtersystems ermöglicht das mehrheitliche Speichern der rekuperierten Bremsenergie auch bei längeren Bremsstrecken, wodurch ein besonders effizientes Antreiben des Fahrzeuges möglich ist.

Gemäss einer weiteren, bevorzugten Ausführungsform des Umrichtersystems ist der netzseitige Umrichter netzseitig zumindest an ein Wechselspannungsnetz und vorzugsweise auch an ein Gleichspannungsnetz anschliessbar.

Diese bevorzugte Ausführungsform des Umrichtersystems ermöglicht eine Anwendung des Umrichtersystem in verschiedenen Versorgungsnetzen, wie beispielsweise wenn ein mit dem Umrichtersystem ausgerüstetes Fahrzeug aus einem AC Versorgungsnetz in ein DC Versorgungsnetz fährt, wie auch in umgekehrter Richtung.

Gemäss einer weiteren, bevorzugten Ausführungsform des Umrichtersystems weist der netzseitige Umrichter zumindest einen AC-zu-DC Umrichter, einen DC-Zwischenkreis, einen DC-zu-AC Umrichter, ein galvanisches Trennmittel und einen passiven AC-zu-DC Umrichter auf, die zueinander in einer Kettenschaltung angeordnet sind.

Diese obengenannte Topologie des Umrichtersystems ermöglicht in Kombination mit dem weiteren Energiespeicher eine äusserst kostengünstige Ausbildung eines unidirektionalen netzseitigen Umrichters, wobei die rekuperierte Energie im weiteren Energiespeicher zwischengespeichert werden kann. Zudem ermöglicht der passiv ausgebildete AC-zu-DC Umrichter eine einfache Regelung des netzseitigen Umrichters.

Gemäss einer weiteren, bevorzugten Ausführungsform des Umrichtersystems ist der netzseitige Umrichter ein modularer Umrichter, der aus mindestens zwei Umrichterzellen besteht, wobei jede Umrichterzelle mindesten einen AC-zu-DC Umrichter, einen DC-Zwischenkreis, einen DC-zu-AC Umrichter, ein galvanisches Trennmittel und einen passiven AC-zu-DC Umrichter aufweist, eingangsseitig in Reihe zueinander und ausgangsseitig parallel zueinander angeschlossen sind.

Diese bevorzugte Ausführungsform des Umrichtersystems ermöglicht durch die Serieschaltung einer genügenden Anzahl an Zellen auf der Versorgungsnetzseite, die Verbindung des Umrichters an ein Hochspannungsversorgungsnetzt, ohne dabei auf einen herkömmlichen Bahntransformator angewiesen zu sein. Weiter ermöglicht diese Ausführungsform die einfache Ausbildung von Redundanz im netzseitigen Umrichter. Ein weiterer Vorteil dieser Ausführungsform besteht darin, dass jedes Modul unabhängig geschaltet werden kann. Dies ermöglicht eine besonders vorteilhafte Regelung des Netzstroms.

Weiter ermöglicht diese Topologie des Umrichtersystems in Kombination mit dem weiteren Energiespeicher eine äusserst kostengünstige Ausbildung eines unidirektionalen netzseitigen Umrichters, wobei die rekuperierte Energie im weiteren Energiespeicher zwischengespeichert werden kann. Zudem ermöglicht der passiv ausgebildete AC-zu-DC Umrichter eine einfache Regelung des netzseitigen Umrichters.

Gemäss einer weiteren, bevorzugten Ausführungsform des Umrichtersystems arbeitet der DC-zu-AC Umrichter serie-resonant.

Gemäss einer weiteren, bevorzugten Ausführungsform des Umrichtersystems ist der netzseitige Umrichter ein passiver Diodengleichrichter.

Diese bevorzugte Ausführungsform des Umrichtersystems ermöglicht eine äusserst kostengünstige und einfache Ausbildung des netzseitigen Umrichters.

Weitere bevorzugte Ausführungsformen der Erfindung sind in den weiteren abhängigen Patentansprüchen angegeben und ergeben sich aus der Beschreibung der bevorzugten Ausführungsformen bzw. Ausführungsbeispielen.

Bevorzugte Ausführungsformen der vorliegenden Erfindung werden in exemplarischer Weise mit Bezug auf die angehängten Zeichnungen beschrieben. Diese bevorzugten Ausführungsformen der Erfindung stellen nicht einschränkende Beispiele der Erfindung dar.

Die Zeichnung zeigt rein schematisch
Fig. 1 ein erstes Ausführungsbeispiel eines erfindungsgemässen Schienenfahrzeugs wie auch eines erfindungsgemässen Umrichtersystems;
Fig. 2 ein zweites Ausführungsbeispiel eines erfindungsgemässen Schienenfahrzeugs wie auch eines erfindungsgemässen Umrichtersystems; und
Fig. 3 zeigt ein Ausführungsbeispiel eines netzseitigen Umrichters für eines der Ausführungsbeispiele.

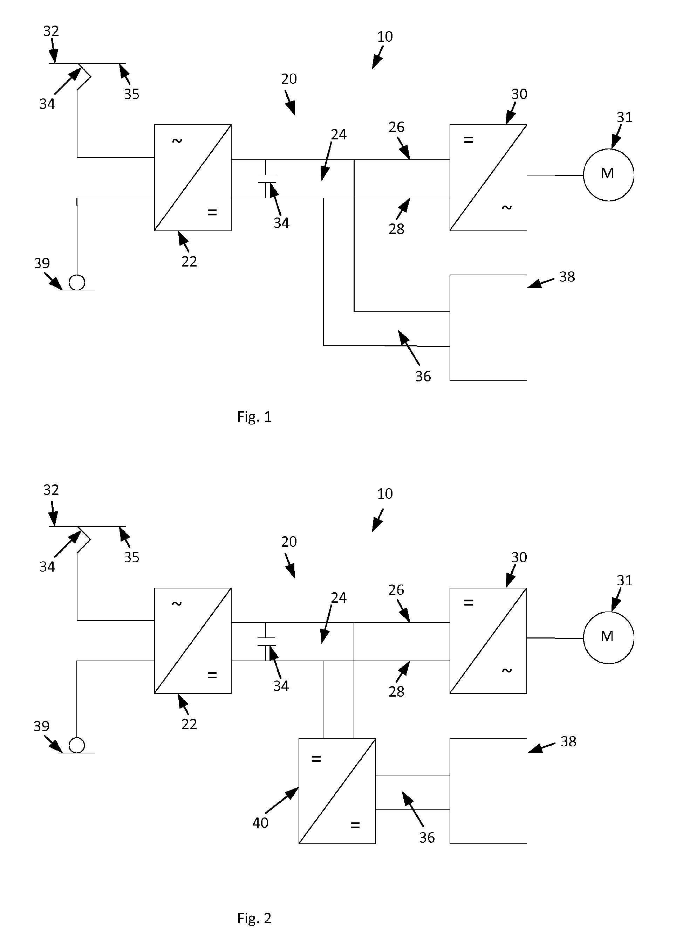

Fig. 1 zeigt ein Ausführungsbeispiel eines erfindungsgemässen elektrischen Schienenfahrzeugs 10 wie auch eines erfindungsgemässen Umrichtersystems 20. Schienenfahrzeuge sind spurgeführte Fahrzeuge, wie Züge, Lokomotiven und Untergrundbahnen mit konventionellen, metallischen Rädern, wie auch mit Luft oder dergleichen gefüllten Reifen. Weitere Fahrzeugtypen sind dem Fachmann bekannt. Das erfindungsgemässe Umrichtersystem kann auch für nicht spurgeführte, elektrische Fahrzeuge verwendet werden, wie beispielsweise Trolleybusse.

Das zum elektrischen Antrieb des Schienenfahrzeuges 10 bestimmte Umrichtersystem 20 weist einen netzseitigen Umrichter 22 und einen Gleichspannungszwischenkreis 24 mit einem ersten Potentialleiter 26 und einem zweiten Potentialleiter 28 auf. Weiter weist das Umrichtersystem 20 einen motorseitigen Umrichter 30 auf, wobei der motorseitige Umrichter 30 einen bidirektionalen Energiefluss erlaubt und mit einer elektrischen Maschine 31 oder mehreren elektrischen Maschinen 31 verbunden ist. Die elektrische Maschine 31 bzw. die elektrischen Maschinen 31 sind dazu bestimmt, die Fahrräder des Schienenfahrzeuges 10 anzutreiben.

Weiter ist es vorteilhaft, wenn die Nennleistung des motorseitigen Umrichters 30 an die Nennleistung der an den motorseitigen Umrichter 30 angeschlossene elektrische Maschine 31 beziehungsweise an die an den motorseitigen Umrichter 30 angeschlossenen elektrischen Maschinen 31 abgestimmt ist.

Anstelle der beschriebenen Ausführungsform des Gleichspannungszwischenkreises 24 kann dieser auch mehr als zwei Potentiale aufweisen, wobei die Ausbildung des Gleichspannungszwischenkreises an die Topologie des netzseitigen Umrichters wie auch des motorseitigen Umrichters angepasst ist. Dem Fachmann sind solche Mehr-Level-Umrichtertopologien bekannt.

Der Begriff "bidirektionaler Energiefluss" bezeichnet, dass der Energiefluss aus dem Gleichspannungszwischenkreis 24 durch den motorseitigen Umrichter 30 in die elektrische Maschine 31, wie auch, dass der Energiefluss in entgegengesetzter Richtung, also von der elektrischen Maschine 31 durch den motorseitigen Umrichter 30 in den Gleichspannungszwischenkreis 24 erfolgen kann.

Dieser bidirektionale Energiefluss wird beispielsweise durch einen in einer bevorzugten Ausführungsform dreiphasigen motorseitigen Umrichter 30 bestehenden aus drei gleichen Phasenmodulen, dem Fachmann als aktiver Wechselrichter bekannt, ermöglicht. Ein Phasenmodul weist zumindest zwei in Serie geschaltete bidirektionale Halbleiterschalter mit gesteuerter unidirektionaler Stromführungsrichtung auf. Diese bidirektionalen Halbleiterschalter weisen in einer bevorzugten Ausführungsform einen IGBT und eine zum IGBT antiparallele Diode auf, wobei diese antiparallele Diode in einer bevorzugten Ausführungsform im IGBT intergiert ist. Jedes Phasenmodul ist eingangsseitig mit dem Gleichspannungszwischenkreis 24 und ausgangsseitig mit einem Phasenleiter zur elektrischen Maschine 31 verbunden. Jeder Phasenleiter zur elektrischen Maschine 31 ist somit schaltbar zumindest mit dem ersten Potentialleiter 26 oder dem zweiten Potentialleiter 28 verbindbar. Der motorseitige Umrichter 30 könnte analog zur oben beschrieben bevorzugten Ausführungsform auch zweiphasig oder mehr als dreiphasig ausgebildet sein.

Der netzseitige Umrichter 22 ist eingangsseitig einphasig und mit einem Versorgungsnetz 32 verbindbar ausgebildet. Ausgangsseitig ist der Umrichter 22 mit dem Gleichspannungszwischenkreis 24 verbunden.

Das Umrichtersystem 20 bezieht während dem Betrieb beziehungsweise beim Fahren mehrheitlich Energie aus dem Versorgungsnetz 32 mit welchem es in einer bevorzugten Ausführungsform über einen Pantographen 34 und der Oberleitung 35 wie auch über die Schiene 39 verbunden ist. Diese Verbindung kann kurzzeitig unterbrochen werden, beispielsweise durch einen Sprung des Pantographen 34 von der Oberleitung 35 oder durch Überfahren einer Trennstrecke, weitere Unterbrechungsgründe sind dem Fachmann bekannt. Es ist aber abgesehen von diesen Unterbrechungen sonst während dem Antreiben des Schienenfahrzeuges 10 eine fortwährende elektrische Verbindung zwischen Versorgungsnetz 32 und dem Umrichtersystem 10 vorgesehen.

Alternativ zu einer elektrischen Verbindung über den Pantographen 34 und die Oberleitung 35 könnte die Verbindung auch über eine weitere Schiene 39 hergestellt sein, wie dies insbesondere bei Untergrundbahnen üblich ist.

Der Gleichspannungszwischenkreis 24 verbindet den netzseitigen Umrichter 22 mit dem motorseitigen Umrichter 30 und weist zwischen dem ersten Potentialleiter 26 und dem zweiten Potentialleiter 28 einen ersten elektrischen Energiespeicher 34 auf. Über eine elektrische Anbindung 36 ist ein weiterer elektrischer Energiespeicher 38 mit den Potentialleitern 26, 28, das heisst mit dem ersten Potentialleiter 26 und dem zweiten Potentialleiter 28, verbunden. Der Energiefluss in den weiteren elektrischen Energiespeicher 38 ist bidirektional und sowohl in Grösse als auch Richtung regelbar. Mit anderen Worten ist der Energiefluss vom Gleichspannungszwischenkreis in den weiteren elektrischen Energiespeicher, wie auch der Energiefluss aus dem weiteren elektrischen Energiespeicher in den Gelichspannungszwischenkreis regelbar.

Typischerweise ist der erste Energiespeicher 34 durch einen Kondensator oder durch mehrere Kondensatoren ausgebildet.

Die elektrische Anbindung 36 weist in einer in Fig. 2 gezeigten Ausführungsform einen weiteren, bidirektionalen Umrichter 40 auf, der einerseits an den Gleichspannungszwischenkreis 24 und andererseits an den weiteren elektrischen Energiespeicher 38 angeschlossen ist. Der weitere, bidirektionale Umrichter 40 ist somit derart ausgebildet, dass die Richtung, wie auch die Grösse des Energieflusses zwischen dem Geleichspannungszwischenkreis 24 und dem weiteren elektrischen Energiespeicher 38 regelbar ist. In einer bevorzugten Ausführungsform entspricht die Nennleistung des weiteren, bidirektionalen Umrichters 40 zumindest 50% der Nennleistung des motorseitigen Umrichters 30. In einer weiteren bevorzugten Ausführungsform entspricht die Nennleistung des weiteren, bidirektionalen Umrichters 40 zumindest 80% und einer weiteren besonders bevorzugten Ausführungsform mindestens 90% der Nennleistung des motorseitigen Umrichters 30.

Der weitere elektrische Energiespeicher 38 ist typischerweise mindestens eine Batterie und/oder ein Superkondensator oder auch ein anderer bekannter elektrischer Energiespeicher. Der maximale Energieinhalt des weiteren elektrischen Energiespeichers 38 ist derart bemessen, dass dieser zumindest während 1 Sekunde, bevorzugt während mindestens 5 Sekunden und besonders bevorzugt während mindestens 10 Sekunden die Nennleistung des motorseitigen Umrichters 30 aufnehmen kann.

In einer bevorzugten Ausführungsform kann der weitere Energiespeicher 38 zumindest fünf Mal, vorzugsweise zumindest 10 Mal und besonders bevorzugt zumindest 15 Mal die Energie des ersten Energiespeichers 34 speichern.

Der netzseitige Umrichter 22 ist ein unidirektionaler Umrichter, da er zumindest ein passiv ausgebildetes Teilelement enthält und daher aufbaubedingt ausschliesslich den Energiefluss in eine Richtung ermöglicht.

Der Begriff "unidirektionaler Energiefluss" bezeichnet den Energiefluss aus dem Versorgungsnetz 32 durch den netzseitigen Umrichter 22 in den Gleichspannungszwischenkreis 24 und schliesst einen möglichen Energiefluss in entgegengesetzter Richtung, also vom Gleichspannungszwischenkreis 24 durch den netzseitigen Umrichter 22 zum Versorgungsnetz 32, aufbaubedingt aus.

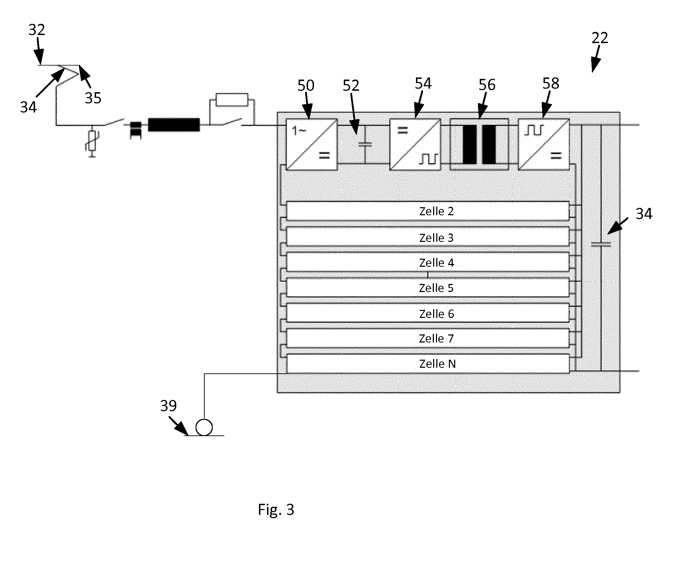

Fig. 3 zeigt ein Ausführungsbeispiel eines unidirektionalen netzseitigen Umrichters 22 des Umrichtersystems 20.

Der netzseitige Umrichter 22 ist in ein modularer Umrichter, bestehend aus mehreren Zellen, Zelle 1 bis Zelle N, wobei N eine beliebige natürliche Zahl sein kann. Die Umrichterzellen sind eingangsseitig in Reihe zueinander und ausgangsseitig parallel zueinander angeschlossen.

Die Zahl N der Umrichterzellen richtet sich nach der Spannungsfestigkeit der einzelnen Zellen und der maximalen Spannung des Versorgungsnetzes 32 sowie gegebenenfalls nach Redundanzkriterien.

In einer bevorzugten Ausführungsform weist jede der Zellen einen AC-zu-DC Umrichter 50, einen DC-Zwischenkreis 52, einen DC-zu-AC Umrichter 54, ein galvanisches Trennmittel 56 und einen passiven AC-zu-DC Umrichter 58 auf, die zueinander in einer Kettenschaltung angeordnet sind.

Eine ähnliche Topologie ist dem Fachmann beispielsweise aus ABB technik 1|12, Seiten 11 bis 17, ISSN 1013-3119 bekannt.

Der vom Versorgungsnetz 35 ausgesehen erste AC-zu-DC Umrichter 50 ist in einer bevorzugten Ausführungsform aktiv ausgebildet, wodurch der Netzstrom regelbar ist.

In einer weiteren, bevorzugten Ausführungsform arbeitet der DC-zu-AC Umrichter des netzseitigen Umrichters 22 serie-resonant.

Der serie-resonant arbeitende DC-zu-AC Umrichter basiert typischerweise auf der Nutzung eines LLC-Resonanzkreis, welcher durch die Streu- und Magnetisierungsinduktivitäten des galvanischen Trennmittels und eines zusätzlich angebrachten Kondensators gebildet wird. Solche serie-resonante DC-zu-AC Umrichter und seine möglichen Ausführungsform sind dem Fachmann bekannt, siehe beispielsweise ebenfalls ABB technik 1|12, Seiten 11 bis 17, ISSN 1013-3119.

Der netzseitige Umrichter 22 des Umrichtersystems 20 ist in einer bevorzugten Ausführungsform, wie beispielsweise in der in Fig. 3 gezeigten Ausführungsform, zumindest an ein Wechselspannungsnetz und in einer besonders bevorzugten Ausführungsform an ein Wechselspannungs- und an ein Gleichspannungsnetz anschliessbar. Im Fall eines Wechselspannungsnetzes übernimmt der netzseitige Umrichter 22 die Funktion eines Gleichrichters. Ist das Versorgungsnetz ein Gleichspannungsnetz funktioniert der netzseitige Umrichter als Gleichspannungswandler, also als Kopplung des Gleichspannungsnetzes und des Gleichspannungszwischenkreises mit gegebenenfalls verschiedenen Gleichspannungswerten.

Der in Fig. 3 gezeigte netzseitige Umrichter 22 erlaubt die Verwendung des Umrichtersystems mit verschiedenen Versorgungsnetzspannungswerten von Wechselspannungsversorgungsnetz wie auch Gleichspannungsversorgungsnetz.

In einer weiteren Ausführungsform ist der netzseitige Umrichter 22 ein passiver Diodengleichrichter, insbesondere ein Mehrpuls-Gleichrichter, ein Brückengleichrichter oder ein Einweggleichrichter. Weitere einsetzbare Gleichrichtertypen sind dem Fachmann bekannt.

## Patentansprüche

1. Umrichtersystem (20) zum elektrischen Antreiben eines Fahrzeuges (10), umfassend einen netzseitigen Umrichter (22), einen Gleichspannungszwischenkreis (24) mit einem ersten Potentialleiter (26) auf einem ersten elektrischen Potential und einem zweiten Potentialleiter (28) auf einem zweiten elektrischen Potential verschieden vom ersten elektrischen Potential und einen motorseitigen Umrichter (30), wobei der motorseitige Umrichter (30) einen bidirektionalen Energiefluss erlaubt, wobei der netzseitige Umrichter (22) eingangsseitig einphasig und mit einem Versorgungsnetz (32) verbindbar, ausgangsseitig mit dem Gleichspannungszwischenkreis (24) verbunden ist und während des Betriebs Energie aus dem Versorgungsnetz (32) bezieht, wobei der Gleichspannungszwischenkreis (24) den netzseitigen Umrichter (22) mit dem motorseitigen Umrichter (30) verbindet, wobei der Gleichspannungszwischenkreis (24) zwischen dem ersten Potentialleiter (26) und dem zweiten Potentialleiter (28) einen ersten elektrischen Energiespeicher (34) aufweist, wobei mit dem Gleichspannungszwischenkreis (24) über eine elektrische Anbindung (36) ein weiterer elektrischer Energiespeicher (38) verbunden ist, und wobei der Energiefluss vom Gleichspannungszwischenkreis (24) in den weiteren elektrischen Energiespeicher (38) regelbar ist, **dadurch gekennzeichnet, dass** der netzseitige Umrichter (22) ein unidirektionaler Umrichter ist und einen Energiefluss vom Versorgungsnetz (32) in den Gleichspannungszwischenkreis (24) erlaubt und ein Energiefluss aus dem weiteren elektrischen Energiespeicher (38) in den Gleichspannungszwischenkreis (24) regelbar ist.

2. Umrichtersystem (20) nach Anspruch 1, **dadurch gekennzeichnet, dass** die elektrische Anbindung (36) einen weiteren, bidirektionalen Umrichter (40) aufweist, der einerseits an den Gleichspannungszwischenkreis (24) und andererseits an den weiteren Energiespeicher (38) angeschlossen ist.

3. Umrichtersystem (20) nach Anspruch 1 oder 2, **dadurch gekennzeichnet, dass** eine Nennleistung des weiteren, bidirektionalen Umrichters (40) zumindest 50% der Nennleistung des motorseitigen Umrichters (30) entspricht, vorzugsweise mindestens 80% der Nennleistung und besonders bevorzugt mindestens 90% der Nennleistung entspricht.

4. Umrichtersystem (20) nach einem der Ansprüche 1 bis 3, **dadurch gekennzeichnet, dass** ein maximaler Energieinhalt des weiteren Energiespeichers (38) derart bemessen ist, dass dieser zumindest während 1 Sekunde, vorzugsweise mindestens während 5 Sekunden und besonders bevorzugt während mindestens 10 Sekunden die Nennleistung des motorseitigen Umrichters (30) aufnehmen kann.

5. Umrichtersystem (20) nach einem der Ansprüche 1 bis 4, **dadurch gekennzeichnet, dass** der weitere Energiespeicher (38) zumindest fünf Mal die Energie des ersten Energiespeichers (34) speichern kann, vorzugsweise mindesten 10 Mal und besonders bevorzugt mindestens 15 Mal speichern kann.

6. Umrichtersystem nach einem der Ansprüche 1 bis 5, **dadurch gekennzeichnet, dass** der erste Energiespeicher (34) ein Kondensator oder mehrere Kondensatoren aufweist.

7. Umrichtersystem nach einem der Ansprüche 1-6, **dadurch gekennzeichnet, dass** der netzseitige Umrichter (22) netzseitig zumindest an ein Wechselspannungsnetz und vorzugsweise auch an ein Gleichspannungsnetz anschliessbar ist.

8. Umrichtersystem nach einem der Ansprüche 1-7, **dadurch gekennzeichnet, dass** der netzseitige Umrichter (22) zumindest einen AC-zu-DC Umrichter (50), einen DC-Zwischenkreis (52), einen DC-zu-AC Umrichter (54), ein galvanisches Trennmittel (56) und einen passiven AC-zu-DC Umrichter (58) aufweist, die zueinander in einer Kettenschaltung angeordnet sind.

9. Umrichtersystem nach einem der Ansprüche 1 bis 7, **dadurch gekennzeichnet, dass** der netzseitige Umrichter (22) ein modularer Umrichter ist, der aus mindestens zwei Umrichterzellen besteht, wobei jede Umrichterzelle mindesten einen AC-zu-DC Umrichter (50), einen DC-Zwischenkreis (52), einen DC-zu-AC Umrichter (54), ein galvanisches Trennmittel (56) und einen passiven AC-zu-DC Umrichter (58) aufweist, eingangsseitig in Reihe zueinander und ausgangsseitig parallel zueinander angeschlossen sind.

10. Umrichtersystem nach Anspruch 8 oder 9, **dadurch gekennzeichnet, dass** der vom Versorgungsnetz ausgesehen erste AC-zu-DC-Umrichter (50) aktiv ausgebildet ist.

11. Umrichtersystem nach einem der Ansprüche 8 bis 10, **dadurch gekennzeichnet, dass** der DC-zu-AC Umrichter (54) serie-resonant arbeitet.

12. Umrichtersystem nach einem der Ansprüche 1 bis 7, **dadurch gekennzeichnet, dass** der netzseitige Umrichter (22) ein passiver Diodengleichrichter ist.

13. Elektrisches Fahrzeug (10), welches beim Fahren mehrheitlich Energie aus einem Versorgungsnetz (32) bezieht, **gekennzeichnet durch** ein Umrichtersystem (20) nach einem der Ansprüche 1 bis 12, wobei der motorseitige Umrichter (22) mit zumindest einer elektrischen Maschine (31) zum Antreiben des Schienenfahrzeugs (10) verbunden ist.

14. Elektrisches Fahrzeug (10) nach Anspruch 13, **dadurch gekennzeichnet, dass** die Nennleistung der zumindest einen elektrischen Maschine (31) auf die Nennleistung des motorseitigen Umrichters (30) abgestimmt ist.

15. Elektrisches Fahrzeug (10) nach Anspruch 13 oder 14, **dadurch gekennzeichnet, dass** das elektrische Fahrzeug (10) spurgeführt ist.
